# EUROPEAN PATENT APPLICATION

(11) **EP 4 095 751 A1**
(43) Date of publication of application: **30.11.2022**
(21) Application number: 21744137.7
(22) Date of filing: 18.01.2021
(51) Int. Cl.: G06K 19/07, G06Q 20/40, G06T 7/00, G06F 21/32

(54) **PORTABLE AUTHENTICATION DEVICE, IC CARD, AND AUTHENTICATION SYSTEM**

(30) Priority: 20.01.2020 JP 2020006637
(71) Applicant: KABUSHIKI KAISHA TOSHIBA, Minato-ku Tokyo 105-0023 (JP); Toshiba Infrastructure Systems & Solutions Corporation, Kawasaki-shi, Kanagawa 212-0013 (JP)
(72) Inventor: KATO, Masakazu, Kawasaki-shi, Kanagawa 212-0013 (JP)
(74) Representative: Horn Kleimann Waitzhofer Patentanwälte PartG mbB
(86) International application number: PCT/JP2021/001453
(87) International publication number: WO 2021/149632

(57) **Abstract**

According to one embodiment, an authentication device includes a sensor, a communication interface, a memory and a processor. The sensor acquires biological information. The communication interface communicates with a device. The memory stores feature information of biological information of a registrant for use in biometrics and management information indicating a device which the registrant has a right to use. The processor authenticates whether a user whose biological information has been acquired by the sensor is the registrant having a right to use the device communicated through the communication interface, and transmits a result of the authentication to the device communicated through the communication interface.

## Description

### FIELD

An embodiment of the present invention relates to a portable authentication device, an IC card and an authentication system.

### BACKGROUND

Conventionally, as a system for operating devices that require access control, such as medical devices, there is an authentication system that authorizes only predetermined (designated) persons or qualified persons to operate a device (referred to as an access control device hereinafter). The conventional authentication system authorizes a user to use an access control device when it can be confirmed that the user is registered in the access control device or a host device such as a server connected to the access control device.

However, when a user is authenticated by an access control device, the access control device has to include hardware for user authentication. In addition, when a user is authenticated by biometrics or the like, there is a problem that an access control device or its host device has to manage biological information of all registrants or the like with security.

On the other hand, IC cards with fingerprint authentication have been put to practical use. The IC cards makes it possible to manage biological information with security and thus achieves high-security biometrics. However, the conventional IC cards simply output a result of biometrics between user's biological information and a registrant and cannot confirm whether the registrant has right to use a device.

### CITATION LIST

### PATENT LITERATURE

Patent literature 1: Jpn. Pat. Appln. KOKAI Publication No. 11-134302

### SUMMARY

### TECHNICAL PROBLEM

To resolve the above-described problem, there is provided a portable authentication device, an IC card and an authentication system, which are capable of supplying a device with a result of biometrics as to whether a user has right to use the device.

### SOLUTION TO PROBLEM

According to one embodiment, an authentication device includes a sensor, a communication interface, a memory, and a processor. The sensor acquires biological information. The communication interface communicates with a device. The memory stores feature information (template) of biological information of a registrant for use in biometrics and management information indicating a device which the registrant has a right to use. The processor authenticates whether a user whose biological information has been acquired by the sensor is the registrant having a right to use the device communicated through the communication interface, and transmits a result of the authentication to the device communicated through the communication interface.

### BRIEF DESCRIPTION OF THE DRAWINGS

FIG. 1 is a block diagram showing a configuration example of an IC card according to an embodiment as a portable authentication device and an authentication system including the IC card.
FIG. 2 is a diagram showing a first configuration example of data held by the IC card according to the embodiment.
FIG. 3 is a diagram showing a first configuration example of data held by the IC card according to the embodiment.
FIG. 4 is a diagram showing a first configuration example of data held by the IC card according to the embodiment.
FIG. 5 is a diagram showing a second configuration example of data held by the IC card according to the embodiment.
FIG. 6 is a diagram showing a second configuration example of data held by the IC card according to the embodiment.
FIG. 7 is a diagram showing a second configuration example of data held by the IC card according to the embodiment.
FIG. 8 is a diagram showing a third configuration example of data held by the IC card according to the embodiment.
FIG. 9 is a timing chart showing an operation example of the IC card according to the embodiment and an authentication system including the IC card.
FIG. 10 is a diagram showing a configuration example of data held by an IC card according to a modification to the embodiment.

### DETAILED DESCRIPTION

An embodiment will be described below with reference to the drawings.

A portable electronic device such as an IC card according to an embodiment is a portable authentication device that performs a person authentication process with security using biological information acquired from a user. In the present embodiment, the IC card includes a fingerprint sensor as a biosensor that acquires an image of a person's fingerprint (fingerprint image) to perform an authentication process using the fingerprint image acquired by the fingerprint sensor.

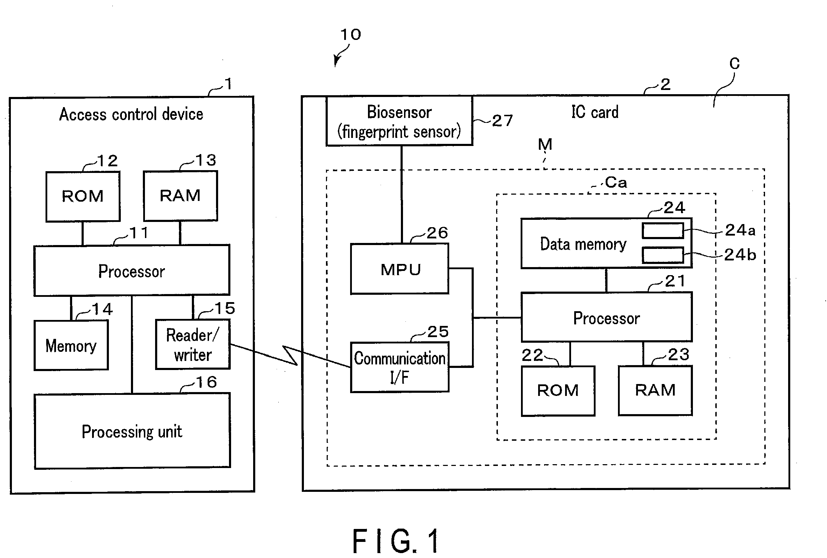

FIG. 1 shows a configuration example of an authentication system 10 including an IC card 2 according to the embodiment.

As shown in FIG. 1, the authentication system 10 is a system including the IC card 2 and an access control device 1 of a plurality of types (1A, 1B, 1C, ...). The access control device 1 is a device that authorizes a specific person to use the device. For example, the access control device 1 may authorize a predetermined person to use it and may authorize a specific qualified person to use it.

The access control device 1 has a function of communicating with the IC card 2 as a portable authentication device. The access control device 1 is a device that can be used by a person who is authorized to use the device when the person is authenticated by the IC card 2. The access control device 1 may be a medical device which can be operated by a predetermined person and may be a device which can be operated by a qualified person.

In the configuration example shown in FIG. 1, the access control device 1 includes a processor 11, a ROM 12, a RAM 13, a data memory 14, a reader/writer 15 and a processing unit 16.

The processor 11 controls each unit and executes various processes. The processor 11 is, for example, a central processing unit (CPU). The processor 11 executes a program stored in the ROM 11 or data memory 14 to control each unit and perform various processes.

The ROM 12 is a nonvolatile memory that stores data that cannot be rewritable. The ROM 12 stores programs or control data. The RAM 13 is a volatile memory that stores data temporarily.

The data memory 14 is a rewritable nonvolatile memory. The data memory 14 is implemented by a hard disk drive data (HDD), a solid state drive (SSD) or the like.

The reader/writer 15 is an interface for communicative connection with the IC card 2. The reader/writer 15 applies power to the IC card 2, supplies a clock thereto, resets the IC card 2, and transmits and receives data to and from the IC card 2. The reader/writer 15 is configured by an interface that conforms to the communication system of the IC card 2.

When the IC card 2 is, for example, a contact-type IC card, the reader/writer 15 configured by a contact unit that is physically and electrically connected to a contact portion of the IC card 2. When the IC card 2 is a non-contact type IC card, the reader/writer 15 is configured by an antenna and a communication control unit for performing radio communication with the IC card 2.

The processing unit 16 performs a process when the IC card 2 authorizes a user to use the device. For example, the processing unit 16 may performs a process when a predetermined person is authenticated by the IC card 2 or when a predetermined qualified person is authenticated by the IC card 2. As a specific example, the processing unit 16 may include a processing mechanism for performing or assisting a medical practice or may include a driving mechanism for driving the device in response to the operation of a person (qualified person) having a driving (operating) license.

Next is a description of the configuration of the IC card 2.

The IC card 2 is a portable authentication device having a function of performing authentication (biometrics) using biological information. In the authentication system according to the embodiment, the IC card 2 is operated by power supplied from the reader/writer 15 of the access control device 1 to perform a process in accordance with a command from the reader/writer 15. The IC card 2 also supplies the reader/writer 15 with a response indicating a result of the process for the command from the reader/writer 15.

In the configuration example shown in FIG. 1, the IC card 2 has a card-shaped main body C that is formed of plastic or the like. The IC card 2 incorporates in the main body C a module M and a biosensor (fingerprint sensor) 27 connected to the module M. The module M is connected to an IC chip Ca, a communication interface 25 and an MPU 26 and formed integrally with them as one unit. The module M is embedded in the main body C of the IC card 2.

In addition, the IC chip Ca includes a processor 21, a ROM 22, a RAM 23, a data memory 24 and the like. The processor 21 is connected to the ROM 22, RAM 23, data memory 24, communication interface 25 and MPU 26 via a data bus or the like. The MPU 26 is connected to the biosensor 27 via a data bus or the like.

Note that the IC card 2 may have a configuration as needed in addition to the configuration shown in FIG. 1 or a specific configuration may be excluded from the IC card 2.

The processor 21 functions as a control unit that controls the entire IC card 2. The processor 21 performs various processes based on the control program and control data stored in the ROM 22 or the data memory 24. For example, the processor 21 executes the program stored in the ROM 22 to perform various processes in accordance with the operation control or operation mode of the IC card 2.

For example, the processor 21 has only to be a processor that executes a program to perform information processing and control of each unit in the IC card 2.

Note that some of the functions fulfilled by executing a program by the processor 21 may be done by a hardware circuit. In this case, the processor 21 controls the functions performed by the hardware circuit.

The ROM 22 is a nonvolatile memory that stores control programs, control data and the like in advance. The ROM 22 is incorporated into the IC card 2 at the production stage while storing the control programs, control data and the like. For example, the control programs and control data are stored in advance in the ROM 22 in accordance with the specifications of the IC card 2.

The RAM 23 is a volatile memory. The RAM 23 temporarily stores data or the like that the processor 21 is processing. For example, the RAM 23 functions as a calculating buffer, a receiving buffer and a transmitting buffer. The calculating buffer temporarily holds results of various arithmetic operations to be performed by the processor 21. The receiving buffer holds command data and the like received from the reader/writer 15 via the communication interface 25. The transmitting buffer holds a message (response data) and the like which are to be transmitted to the reader/writer 15 via the communication interface 25.

The data memory 24 is configured by a nonvolatile memory capable of writing and rewriting data, such as a flash ROM. The data memory 24 stores control programs, applications and various types of data in accordance with the operating use of the IC card 2. For example, program files and data files are created in the data memory 24. The control programs and various types of data are written to each of the created files.

In addition, the data memory 24 stores feature information (template) 24a of biological information obtained from biological information of a registrant as dictionary data for biological (fingerprint) authentication. The feature information 24a of the biological information is, for example, feature information as a feature amount extracted from the biological information of a registrant. The data memory 24 stores feature information 24a of biological information for each registrant. The IC card 2 may register the feature information 24a of biological information for one specific registrant or may register the feature information 24a (24a1, 24a2, 42a3, ...) of a plurality of items of biological information corresponding to a plurality of registrants.

In addition, the data memory 24 includes a management table 24b indicating the access control device 1 that can be used by a user (registrant). The management table 24b stores information representing the relationship between registrants the feature information 24a of biological information of which is registered and access control devices which can be used by the registrants. The management table 24b has only to store data representing the relationship between registrants and the right to use access control devices. For example, the management table 24b may store information indicating an access control device that is available for each registrant, information indicating a registrant having a right to use each access control device, and information indicating the correspondence between a plurality of registrants and rights to use a plurality of access control devices. Furthermore, the management table 24b may store the qualification of a registrant and a right to use an access control device for various qualifications in association with each other.

The communication interface 25 is an interface for transmitting and receiving data to and from the reader/writer 15. That is, the communication interface 25 is an interface for transmitting and receiving data to and from the access control device 1 via the reader/writer 15.

When the IC card 2 is implemented as a contact-type IC card, the communication interface 25 includes a contact unit and a communication control unit which are in physical and electrical contact with the reader/writer 15 to transmit and receive signals to and from the reader/writer 15. For example, the IC card 2 is activated upon receipt of operating power and operating clocks from the reader/writer 15 via the contact unit.

When the IC card 2 is implemented as a non-contact type IC card, the communication interface 25 includes an antenna and a communication control unit such as a modulation/demodulation circuit for performing radio communication with the reader/writer 15. For example, the IC card 2 receives radio waves from the reader/writer 15 via the antenna, modulation/demodulation circuit and the like. The IC card 2 generates operating power and operating clocks from the radio waves by a power supply unit (not shown) and is thus activated.

The biosensor 27 acquires biological information of an operator. The biosensor 27 is, for example, a fingerprint sensor. The fingerprint sensor serving as the biosensor 27 acquires a fingerprint image from the operator's fingers. The fingerprint sensor serving as the biosensor 27 includes a CCD sensor and the like. In addition, the fingerprint sensor 27 may include a sensor that senses a change in electrical capacitance. The fingerprint sensor 27 transmits a fingerprint image to the MPU 26.

Hereinafter, the present embodiment will be described on the assumption that the IC card 2 is a contact-type IC card, but it can be achieved similarly even though the IC card 2 is a non-contact type IC card. Also, assume that the biosensor 27 is a fingerprint sensor, and a user's finger can be put at a reading position of the fingerprint sensor while the IC card 2 is set in the reader/writer 15 of the access control device 1.

The micro processing unit (MPU) 26 processes a fingerprint image from the fingerprint sensor 27. The MPU 26 is configured to include a processor, a RAM, a ROM and the like. The process performed by the MPU 26, which will be described in the present embodiment, can be achieved by the processor 21 in the IC chip Ca using the ROM 22 and RAM 23. Thus, the process to be performed by the MPU 26, which will be described below, may be done by the processor 21.

The MPU 26 extracts feature information (information indicating the coordinates, amount and the like of features) from the fingerprint image from the fingerprint sensor 27. The MPU 26 transmits the extracted feature information to the processor 21. The processor 21 may perform the process of extracting feature information from the fingerprint image acquired by the fingerprint sensor 27 as described above.

The processor 21 verifies the feature information extracted from the fingerprint image, which is acquired by the fingerprint sensor 27 and transmitted from the MPU 26, with the feature information of fingerprint images registered in the data memory 24 or the like. For example, in accordance with a predetermined algorithm, the processor 21 calculates a similarity between the feature information extracted from the fingerprint image acquired by the fingerprint sensor 27 and the feature information of the registered fingerprint images, as a similarity between the fingerprint images. Here, the similarity is an index indicating that the similarity between the fingerprint images becomes higher as the calculated similarity increases.

The processor 21 reads and holds the feature information of the fingerprint images registered in the data memory 24 or the like. The processor 21 verifies the feature information transmitted from the MPU 26 with the feature information held in the processor 21 to calculate a similarity between them.

When the processor 21 calculates the similarity, it compares the calculated similarity with a threshold value for authentication as a verification process (authentication process) to determine the success or failure of the authentication. For example, if the calculated similarity is equal to or greater than the threshold value for authentication, the processor 21 determines that the persons are the same (success in authentication), and if the calculated similarity is less than the threshold value for authentication, the processor 21 determines that the persons are not the same (failure in authentication), thus obtaining the result of the authentication process.

Note that the MPU 26 may perform the verification process between the fingerprint image acquired by the fingerprint sensor 27 and the registered fingerprint images. For example, the MPU 26 may perform a verification process to calculate a similarity between the fingerprint image acquired by the fingerprint sensor 27 and the registered fingerprint images and transmit the calculated similarity to the processor 21. The MPU 26 may also compare the calculated similarity with a threshold value for authentication to transmit the success or failure of authentication to the processor 21.

Note that the IC card 2 may include a display unit that displays various items of information under the control of the processor 21. For example, the display unit may be a light (for example, a light emitting diode (LED) light) that is turned on under the control of the processor 21.

Next is a description of information stored in the IC card 2 as a portable authentication device according to the embodiment.

According to the foregoing configuration example, the data memory 24 of the IC card 2 stores the feature information 24a and management table 24b of biological information for each registrant. As described above, the IC card 2 may register feature information 24a of biological information of one registrant or may register feature information 24a1, 24a2, ... of biological information for a plurality of registrants. The management table 24b has only to store information representing the relationship between a registrant and an access control device having a right to use.

Below is a description of a configuration example of the feature information 24a and management table 24b of biological information of a registrant to be registered in the IC card 2 as the portable authentication device according to the embodiment. Assume here that as a specific example, there are three registrants (user 1, user 2, user 3) and three access control devices (device A, device B, device C).

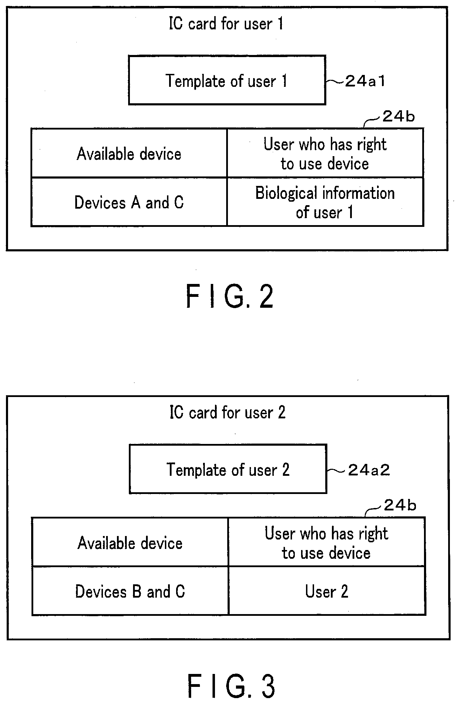

FIGS. 2 to 4 are diagrams each showing a configuration example of the feature information 24a and management table 24b of biological information of a registrant in the IC card 2 that is issued for each user (registrant).

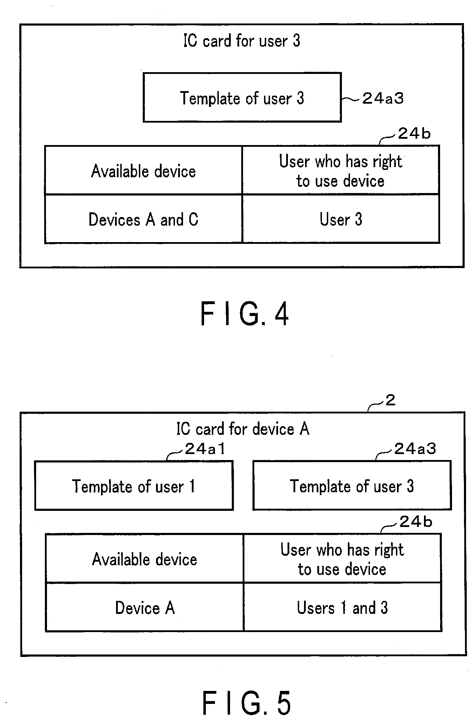

FIG. 2 shows an example of the feature information 24a and management table 24b of biological information of registrants in the IC card (IC card for the user 1) 2 issued to the user 1. FIG. 3 shows an example of the feature information 24a and management table 24b of biological information of registrants in the IC card (IC card for the user 2) 2 issued to the user 2. FIG. 4 shows an example of the feature information 24a and management table 24b of biological information of registrants in the IC card (IC card for the user 3) 2 issued to the user 3.

In the example shown in FIG. 2, the data memory 24 of the IC card 2 stores the feature information 24a of biological information of registrants, which is dictionary data for biometrics of the user 1, and the management table 24b that stores information indicating the access control device 1 which the user 1 has a right to use. The management table 24b shown in FIG. 2 indicates that the user 1 who can perform biometric authentication using the feature information 24a of biological information of registrants has a right to use the device A and device C.

In the example shown in FIG. 3, the data memory 24 of the IC card 2 stores the feature information 24a of biological information, which is dictionary data for biometrics of the user 2, and the management table 24b that stores information indicating the access control device 1 which the user 2 has a right to use. The management table 24b shown in FIG. 3 indicates that the user 2 who can perform biometric authentication using the feature information 24a of biological information has a right to use the device B and device C.

In the example shown in FIG. 4, the data memory 24 of the IC card 2 stores the feature information 24a of biological information, which is dictionary data for biometrics of the user 3, and the management table 24b that stores information indicating the access control device 1 which the user 3 has a right to use. The management table 24b shown in FIG. 3 indicates that the user 3 who can perform biometric authentication using the feature information 24a of biological information has a right to use the device A and device C.

According to the examples shown in FIGS. 2 to 4, the feature information 24a of biological information of each user (registrant) who holds the IC card 2 and the information indicating a device that is available by the user are registered in the IC card 2. Thus, the IC card 2 can be provided in which not only biometrics for the registrant who holds the IC card 2 but also the device that is available by the registrant (user) can be confirmed. For example, when an IC card with a biometrics function is issued to each user as an ID card or the like, if the feature information 24a and management table 24b of biological information of the registrant as shown in FIGS. 2 to 4 are registered in the IC card 2, a device for use can be confirmed and biometrics of the user can be achieved in the IC card 2, as will be described later.

FIGS. 5 to 7 are diagrams each showing a configuration example of the feature information 24a and management table 24b of biological information of a registrant in the IC card 2 issued for each access control device.

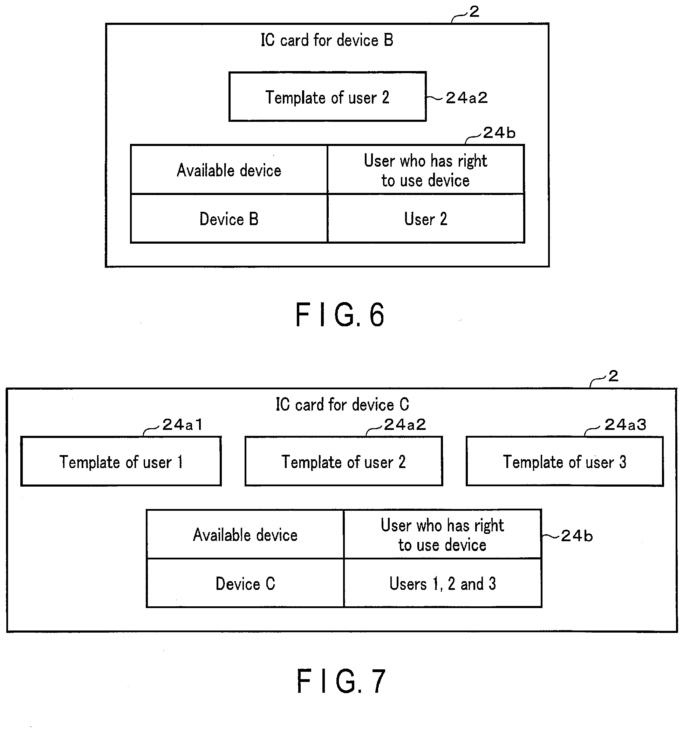

FIG. 5 shows an example of the feature information 24a and management table 24b of biological information of a registrant in the IC card (IC card for the device A) 2 issued to the device A. FIG. 6 shows an example of the feature information 24a and management table 24b of biological information of a registrant in the IC card (IC card for the device B) 2 issued to the device B. FIG. 7 shows an example of the feature information 24a and management table 24b of biological information of a registrant in the IC card (IC card for the device C) 2 issued to the device C.

In the example shown in FIG. 5, the data memory 24 of the IC card 2 stores the feature information 24a1 of biological information of the user 1 having a right to use the device A, the feature information 24a2 of biological information of the user 2, and the management table 24b that stores information indicating a user having a right to use the device A. The management table 24b shown in FIG. 5 indicates that the users having a right to use the device A are the user 1 of the feature information 24a1 of the biological information and the user 2 of the feature information 24a2 of the biological information.

In the example shown in FIG. 6, the data memory 24 of the IC card 2 stores the feature information 24a2 of biological information of the user 2 having a right to use the device B and the management table 24b that stores information indicating a user having a right to use the device B. The management table 24b shown in FIG. 6 indicates that the user having a right to use the device B is the user 2 of the feature information 24a2 of the biological information.

In the example shown in FIG. 7, the data memory 24 of the IC card 2 stores the feature information 24a1 of biological information of the user 1 having a right to use the device C, the feature information 24a2 of biological information of the user 2, the feature information 24a3 of biological information of the user 3, and the management table 24b that stores information indicating a user having a right to use the device C. The management table 24b shown in FIG. 7 indicates that the users having a right to use the device C are the user 1 of the feature information 24a1 of the biological information, the user 2 of the feature information 24a2 of the biological information and the user 3 of the feature information 24a3 of the biological information.

According to the examples shown in FIGS. 5 to 7, in the IC card 2 issued (set) for each access control device, a user who can use the access control device and the feature information of biological information of the user are registered. The IC card 2 can thus confirm not only biometrics for each registrant but also a user who can use the device. For example, in the case of an operation of issuing an IC card for each access control device, confirmation of a used device in an IC card 2 for each device and biometrics of the user as described later can be achieved if the feature information 24a of biological information of a registrant and the management table 24b as shown in FIGS. 5 to 7 are registered in the IC card 2.

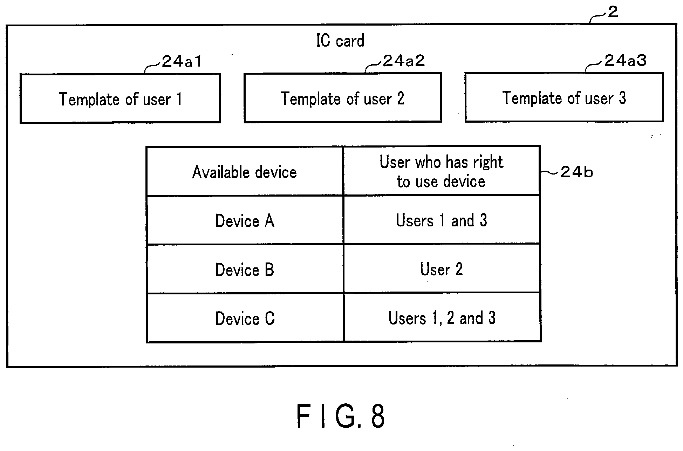

FIG. 8 is a diagram showing a configuration example of the feature information 24a and management table 24b of biological information of registrants in the IC card 2 issued to one system.

FIG. 8 shows an example of the feature information 24a and management table 24b of biological information of registrants in an IC card (IC card for the master) 2 issued to the entire system including three devices A, B and C.

In the example shown in FIG. 8, the data memory 24 of the IC card 2 stores feature information items 24a1, 24a2 and 24a3 of biological information for three persons, and the management table 24b that stores information indicating a user having a right to use each of the three devices.

The feature information items 24a1, 24a2 and 24a3 of biological information shown in FIG. 8 are dictionary data for biometrics of user 1, user 2 and user 3, respectively. The management table 24b shown in FIG. 8 indicates that the user having a right to use the device A is users 1 and 2, the user having a right to use the device B is user 2 and the user having a right to use the device C is users 1, 2 and 3.

According to the example shown in FIG. 8, in the IC card 2 to be issued (set) for the entire system including a plurality of access control devices, a user who can use each of the access control devices and the feature information of biological information of the user are registered. The IC card 2 can thus confirm not only biometrics for a plurality of registrants but also a user who can use each of the devices. For example, in the case of an operation of issuing a single IC card for the entire system including the access control devices, confirmation of a used device in the IC card 2 and biometrics of the user as described later can be achieved if the feature information 24a of biological information of the registrants and the management table 24b as shown in FIG. 8 are registered in the IC card 2.

Since, in the embodiment, person authentication is performed by biometrics using the IC card 2 every time an access control device is used, an IC card having the configurations shown in FIGS. 2 to 4, an IC card having the configurations shown in FIGS. 5 to 7, and an IC card having the configuration shown in FIG. 8 may be issued. If, for example, not only an IC card for each person as shown in FIGS. 2 to 4, but also an IC card (master IC card) for the entire system as shown in FIG. 8 is issued, an access control device can be used by the master IC card even when the IC card for each user a failure occurs or lost.

Next is a description of an operation example of the authentication system 10 including the IC card 2 as a portable authentication device according to the embodiment.

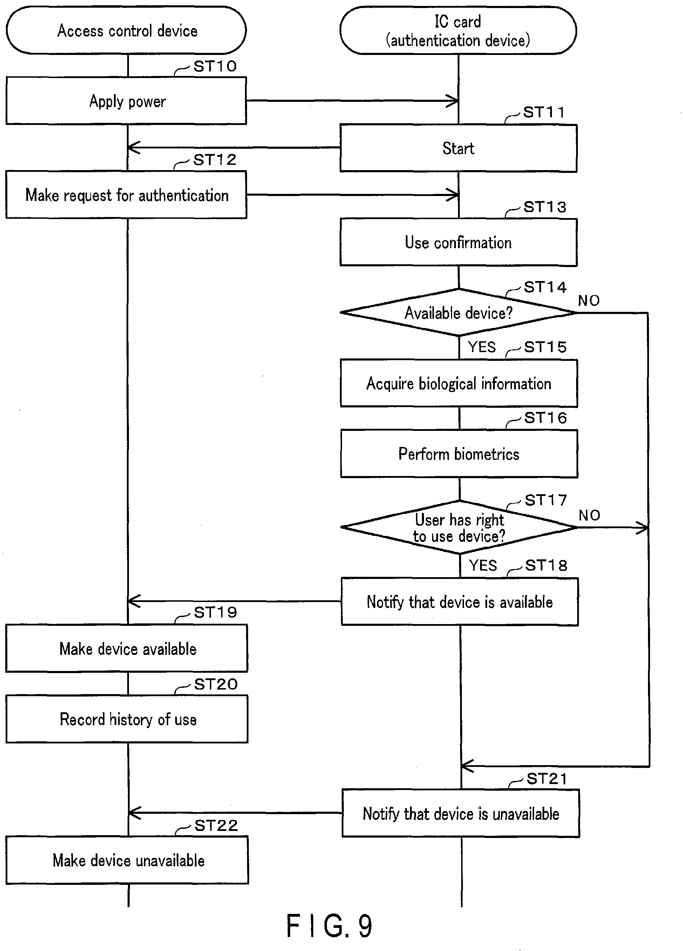

FIG. 9 is a timing chart for describing the operation example of the authentication system 10 according to the embodiment.

A user who is going to use an access control device 1 sets the IC card 2 in the reader/writer 15 of the access control device 1 for biometric (fingerprint) authentication. The access control device 1 applies power for operation to the IC card 2 set in the reader/writer 15 (ST10). Upon receiving the power from the reader/writer 15 via the communication interface 25, the IC card 2 is activated (started) (ST11).

When the processor 21 of the IC card 2 is started by the power from the reader/writer 15, it transmits an initial response to the reader/writer 15. The reader/writer 15 applies the power for operation to the set IC card 2 and receives the initial response from the IC card 2. Upon receiving the initial response, the reader/writer 15 performs mutual authentication with the IC card 2 to establish a communication state. When the processor 11 of the access control device 1 establishes a state of communication with the IC card 2 via the reader/writer 15, it transmits the device ID as identification information of the access control device 1 and transmits a command to make a request for user authentication in the IC card 2 (ST12).

Upon receiving the device ID of the access control device, the processor 21 of the IC card 2 confirms whether the feature information of biological information of a person having a right to use the access control device 1 indicated by the received device ID is registered in the IC card 2 (ST13). The processor 21 refers to the management table 24b to confirm whether the biological information of the person having a right to use the access control device of the device ID is registered to determine whether the access control device 1 is a device that can be used using the IC card 2 (ST14).

For example, when the biological information of a person who has a right to use a device of the received device ID is registered, the processor 21 assumes the access control device 1 in which the IC card 2 is set to be available. If the biological information of a person who has a right to use a device of the received device ID is not registered, the processor 21 assumes the access control device 1 in which the IC card 2 is set to be unavailable.

That is, when the processor 21 determines that a registrant having a right to use the access control device 1 is not registered in the IC card 2 (NO in ST14), it responds to the access control device 1 to indicated that the access control device 1 is an unavailable device (ST 20). In this case, the access control device 1 in which the IC card 2 is set receives the response indicating that the device is unavailable as described above to make the processing unit 16 unable to perform its process.

When the processor 21 determines that a registrant having a right to use the access control device 1 is registered in the IC card 2 (YES in ST14), it activates the fingerprint sensor 27 as a biosensor through the MPU 26 to acquire a fingerprint image as biological information of a user (ST15) with the fingerprint sensor 27. Assume here that the user places his or her finger having a fingerprint for authentication at a reading position of the fingerprint sensor 27. The MPU 26 may detect that the finger is placed at the reading position of the fingerprint sensor 27 and read a fingerprint image by the fingerprint sensor 27.

When the fingerprint sensor 27 acquires a fingerprint image, the processor 21 and the MPU 26 perform biometric (fingerprint) authentication using the acquired fingerprint image (ST16). For example, the MPU 26 extracts feature information from the fingerprint image acquired by the fingerprint sensor 27, and transmits the extracted feature information to the processor 21. Thus, the processor 21 acquires feature information of the user's fingerprint image read by the fingerprint sensor 27 from the MPU 26.

When the processor 21 acquires the feature information of the user's fingerprint image, it verifies the acquired feature information with the feature information of registrants' fingerprint images registered in the data memory 24. The processor 21 calculates the similarity between the feature information of the user's fingerprint image and the feature information of the registrants' fingerprint images to determine whether the user is a registrant according to whether the calculated similarity is equal to or greater than a threshold value for authentication.

When the user is recognized as a registrant by the fingerprint authentication (when the biometrics is successful), the processor 21 determines whether the user matching the registrant (i.e., the registrant) has a right to use the access control device 1 indicated by the device ID (ST17). When the user is authenticated as a registrant having a right to use the access control device 1 (YES in ST17), the processor 21 responds to the reader/writer 15 of the access control device 1 through the communication interface 25 to indicate that the user placing his or her finger on the fingerprint sensor 27 is authenticated as a registrant who can use the access control device 1 indicated by the device ID (ST18).

When the reader/writer 15 receives a response indicating that the user has been authenticated as a registrant from the IC card 2, the processor 11 of the access control device 1 allows the processing unit 16 to perform a process required by the user (ST19). In this case, the processor 11 of the access control device 1 records in the memory 14 history information indicating the use contents executed by the user together with information indicating the user who is allowed to use the device according to a result of the authentication in the IC card 2 (ST20).

When the processor 11 cannot determine that the user is a registrant having a right to use the access control device 1 (NO in ST17), it responds to the access control device 1 to indicate that the user cannot be confirmed as a registrant having a right to user the access control device 1 or that the access control 1 is unavailable (ST21).

Upon receiving from the IC card 2 a response indicating that the user cannot be authenticated as a registrant or that the access control device 1 is an unavailable device, the processor 11 of the access control device 1 disables the operation of the processing unit 16 and makes the user unable to use the access control device 1 (ST22). In this case, the processor 11 of the access control device 1 may record in the memory 14 history information indicating that the device cannot be used as a result of the authentication in the IC card 2.

According to the process described above, when the ID card as a portable authentication device including biosensor is communicatively connected to an access control device, it confirms whether a registrant registered in the IC card has a right to use the access control device and confirms whether a user is the registrant having a right to use the access control device by biometrics acquired by the biosensor.

Thus, even if an access control device or a host device of the access control device does not manage the access control of each user, the IC card can prevent a person who does not have a right to use the access control device from using the access control device and can confirm the user as a person who has a right to use the access control device by the biometrics. As a result, the IC card can confirm the use of a device with reliability, and the biometrics can prevent impersonation attacks. Therefore, a person having a right to use an access control device can use the access control device with reliability.

For example, when an access control device is a medical device for performs a medical act (medical process) in the processing unit, the IC card performs a process of confirming a user's right to use the access control device and performing biometrics to confirm that the user is identified as a registrant (a patient or a specific operator) having a right to use the access control device by biological information. Accordingly, the IC card can allow the access control device to perform a medical process when biometrics are successful for a person having a right to use the access control device, with the result that the medical process can reliably be performed by a right access control device associated with a registrant.

### (Modification)

In the foregoing embodiment, it is confirmed whether a registrant whose biological feature information is registered in an IC card has a right to use a device specified by a device ID. However, it may be confirmed whether a registrant is a qualified person having a right to use a device specified by a device ID. In this case, the management table 24b of the IC card 2 stores information indicating qualifications of the registrant and information indicating qualifications for allowing each access control device to be used.

Below is a description of an example of confirming whether an access control device is available based on user's qualifications, as a modification to the foregoing embodiment.

An authentication system 10 according to the modification will not be described in detail because its configuration excluding the management table 24b can be achieved by the configuration similar to that of the foregoing embodiment.

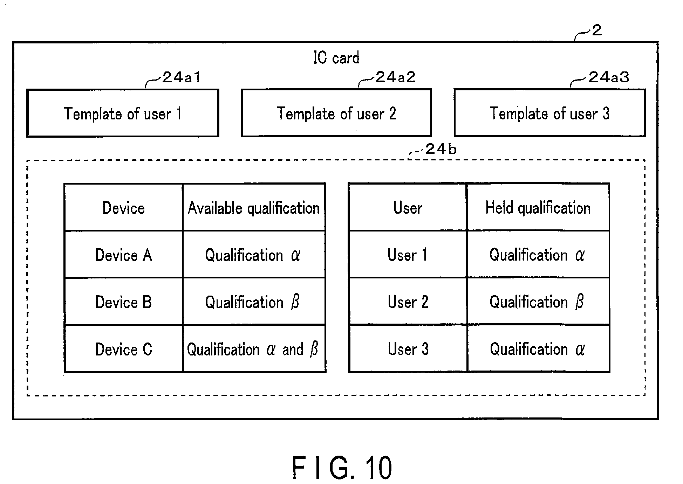

FIG. 10 is a diagram showing a configuration example of feature information 24a of biological information of registrants in the IC card 2 and a management table 24b when the right to use the access control device is confirmed based on qualification information.

In the configuration example shown in FIG. 10, a data memory 24 of the IC card 2 stores feature information items 24a1, 24a2 and 24a3 of biological information for three persons and a management table 24b including a first table 24b1 and a second table 24b2. The first table 24b1 stores information indicating a qualification necessary to use each of the access control devices (devices A, B, C). The second table 24b2 stores information indicating qualifications of each of the registrants (users 1, 2, 3).

According to the example shown in FIG. 10, the device A can determine from the first table 24b1 that the qualification necessary for use is α and can determine from the second table 24b2 that users having the qualification α is the users 1 and 3. That is, referring to the management table 24b, the processor 21 of the IC card 2 shown in FIG. 10 can specify that the users 1 and 3 have a right to use the device A.

In the example shown in FIG. 10, the device B can determine from the first table 24b1 that the qualification necessary for use is *β* and can determine from the second table 24b2 that a user having the qualification *β* is the user 2. That is, referring to the management table 24b, the processor 21 of the IC card 2 shown in FIG. 10 can specify that the user 2 has a right to use the device B.

In the example shown in FIG. 10, the device C can determine from the first table 24b1 that the qualification necessary for use is α or *β* and can determine from the second table 24b2 that users having the qualification α are the users 1 and 3 and a user having the qualification *β* is the user 3. That is, referring to the management table 24b, the processor 21 of the IC card 2 shown in FIG. 10 can specify that the users 1, 2 and 3 have a right to use the device C.

In addition, the authentication system according to the modification can perform a process in a manner similar to the foregoing process shown in FIG. 9. However, in the process of ST13 in FIG. 9, as described above, information registered in the management table 24b as shown in FIG. 10 may be referred to in order to confirm whether an access control device in which the IC card is set is an available device based on the qualification of a registrant.

The foregoing modification makes it possible to provide an IC card as a portable authentication device capable of not only biometrics for a plurality of registrants but also confirming a user who can use each device based on the qualifications of the registrants.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A portable authentication device comprising:
a sensor which acquires biological information;
a communication interface which communicates with a device;
a memory which stores feature information of biological information of a registrant for use in biometrics and management information indicating a device which the registrant has a right to use; and
a processor which authenticates whether a user whose biological information has been acquired by the sensor is the registrant having a right to use the device communicated through the communication interface, and transmits a result of the authentication to the device communicated through the communication interface.

2. The portable authentication device of claim 1,
wherein the memory stores feature information of biological information of a specific registrant and management information indicating a device which the specific registrant has a right to use.

3. The portable authentication device of claim 1,
wherein the memory stores feature information of biological information of a plurality of registrants and management information indicating a registrant having a right to use a specific device.

4. The portable authentication device of claim 1,
wherein the memory stores feature information of biological information of a plurality of registrants and management information indicating a registrant having a right to use a plurality of devices.

5. The portable authentication device of one of claims 1 to 4, wherein the sensor is a fingerprint sensor which acquires a fingerprint image as biological information.

6. An IC card comprising:
a fingerprint sensor which acquires fingerprint information;
a module including a communication interface which communicates with a device, a memory which stores feature information of a fingerprint image of a registrant for use in fingerprint authentication and management information indicating a device which the registrant has a right to use, and a processor which authenticates whether a user whose fingerprint information has been acquired by the fingerprint sensor is the registrant having a right to use the device communicated through the communication interface, and transmits a result of the authentication to the device communicated through the communication interface; and
a main body incorporating the fingerprint sensor and the module which are connected to each other.

7. An authentication system including an access control device and a portable authentication device, wherein:
the access control device includes:
a reader/writer which communicates with the portable authentication device; and
a processor which requests the portable authentication device communicated through the reader/writer to authenticate whether a user has a right to use the access control device, and restricts an operation of the access control device in accordance with a result of the authentication by the portable authentication device; and
the portable authentication device includes:
a sensor which acquires biological information;
a communication interface which communicates with the access control device;
a memory which stores feature information of biological information of a registrant for use in biometrics and management information indicating a device which the registrant has a right to use; and
a processor which authenticates whether a user whose biological information has been acquired by the sensor is the registrant having a right to use the access control device communicated through the communication interface, and transmits a result of the authentication to the access control device communicated through the communication interface.
